**Europäisches Patentamt**

**European Patent Office**

**Office européen des brevets**

(19)

(11) Veröffentlichungsnummer: **0 116 956**

**B1**

(12) # EUROPÄISCHE PATENTSCHRIFT

(45) Veröffentlichungstag der Patentschrift:
**16.12.87**

(51) Int. Cl.⁴: **C 10 C 1/00**

(21) Anmeldenummer: **84101593.6**

(22) Anmeldetag: **16.02.84**

(54) **Verfahren zur Reinigung von hochfeststoffhaltigen Kokereiteeren.**

(30) Priorität: **17.02.83 DE 3305431**

(43) Veröffentlichungstag der Anmeldung:
**29.06.84 Patentblatt 84/35**

(45) Bekanntmachung des Hinweises auf die Patenterteilung:
**16.12.87 Patentblatt 87/51**

(84) Benannte Vertragsstaaten:
**BE DE FR GB IT NL SE**

(56) Entgegenhaltungen:
**EP-A-0 032 420**
**BE-A-537 330**
**DE-A-2 828 976**
**DE-A-3 212 316**
**DE-C-534 644**
**FR-A-395 738**
**US-A-2 956 944**
**US-A-3 595 946**

(73) Patentinhaber: **Carl Still GmbH & Co. KG,
Kaiserwall 17- 23, D-4350 Recklinghausen (DE)**
Patentinhaber: **Bergwerksverband GmbH, Franz-
Fischer- Weg 61, D-4300 Essen 13 (DE)**

(72) Erfinder: **Stalherm, Dieter, Dr., Ahornstrasse 8,
D-4350 Recklinghausen (DE)**
Erfinder: **Hillebrand, Wolfgang, Dr., Holterhauser
Strasse 68, D-4600 Dortmund 16 (DE)**
Erfinder: **Gwosdz, Alfred, Mülheimer Strasse 74,
D-4200 Oberhausen (DE)**
Erfinder: **Romey, Ingo, Dr., Sandkamp 25, D-4224
Hünxe (DE)**

(74) Vertreter: **Dahlkamp, Heinrich- Leo, Dipl.- Ing., c/o
Firma Carl Still GmbH & Co. KG Kaiserwall 17 -
23, D-4350 Recklinghausen (DE)**

EP 0 116 956 B1

**Beschreibung**

Die Erfindung betrifft ein Verfahren zur Reinigung von hochfeststoffhaltigen Kokereiteeren, die nach verschiedenen Trennverfahren vom Rohgas anfallen.

Bei der Hochtemperaturverkokung von Kohle, die vorgetrocknet und/oder vorerhitzt in die Verkokungsöfen eingefüllt wird, wird ein Teer gebildet, der sich mit den üblichen Methoden der Teerscheidung nicht ausreichend entwässern läßt und dessen Feststoffgehalt so hoch ist, daß er den Spezifikationen der Teerverarbeiter nicht gerecht wird. Der Feststoffgehalt bzw. QI-Gehalt (bestimmt als Anteil an Chinolinunlöslichen) solcher Teere liegt ca. zwischen 10 und 30 Gew-%, der Wassergehalt zwischen 10 und 20 Gew-%. Der hohe Feststoffanteil ist bedingt durch die Verkokungsbedingungen (Einsatz vorgetrockneter und vorerhitzter Kohle, höhere Verkokungstemperatur) sowie verstärkte Umweltschutzauflagen, die ein stärkeres Absaugen während des Befüllungsvorganges erforderlich machen, was zu einem größeren Feststoffübertrag (carry over) in die Vorlage führt. Versuche, durch konstruktive Änderungen am Koksofen und an der Absaugungsvorrichtung Abhilfe zu schaffen, brachten bisher nicht die gewünschten Ergebnisse.

Bei der Verkokung von Feinkohle in Verkokungsöfen fällt auch bei Einsatz feuchter Kohle etwa 1 bis 2 Gew-% des Teeres als sogenannter Dicteer an der ca. 30 bis 50 Gew-% Feststoffe enthält. Bei modernen Hochleistungsverkokungsöfen, in denen die Kohle bei höheren Temperaturen verkokt wird und aufgrund des erheblich erhöhten Füllvolumens die Absaugung der Füllgase ebenfalls verstärkt wird, kommt es häufig zu einem verstärkten carry-over, d. h. erhöhten Feststoffübertrag aus der Verkokungskammer in die Vorlage. Dadurch wird die Teerqualität ebenfalls schlechter und hat einen noch höheren Dickteeranfall zur Folge.

Diese hochfeststoffhaltigen Teere lassen sich in den üblichen Teerdestillationen nicht verarbeiten. Sie lassen sich auch nur sehr begrenzt der Kohle zumischen, da aufgrund ihrer schlammigen Konsistenz eine Homogenisierung von Kohle und Teer bisher nicht zu erreichen war. Außerdem ließ sich auf diese Weise nur ein Bruchteil des bei Einsatz vorerhitzter Kohle (z. B. nach dem Precarbon-Verfahren) anfallenden Teeres wieder zu den Verkokungsöfen zurückfuhren. Jeder Art von Weiterverwendung, etwa indem man sie verbrennt, steht ihre begrenzte Pumpbarkeit und ihre Neigung zur Sedimentation entgegen. Diese hochfeststoffhaltigen Teere sind also nicht nur wertlos, sondern stellen daruber hinaus auch ein Umweltproblem dar.

Aus der US-A-4 259 171 ist es bekannt, daß man Teere mit einem hohen Anteil an Feststoffen durch Zentrifugieren in zwei flüssige Strome teilt, wovon einer einen reduzierten, der andere einen angereicherten Chinolinunlöslichenanteil hat. Hierdurch wird das Problem aber nur zum Teil gelöst, da der Restschlamm nach wie vor schwierig zu entsorgen ist. Aus der US-A-2 956 944 sind Versuche zur Filtration mit Plattenfiltern bekannt, die aber wegen der notwendigen, kostspieligen Verdünnung sowie der noch nicht befriedigenden Konsistenz des Rückstandes nicht zum Erfolg geführt haben.

Aufgabe der Erfindung ist es daher, ein Verfahren zur Reinigung von hochfeststoffhaltigen Kokereiteeren vorzuschlagen, wobei die Rückstande in eine Form gebracht werden, in der sie kommerziell verwertbar oder zumindest ohne Probleme einem Verwendungszweck zugeführt werden können, in dem sie keine Umweltbeeinträchtigung darstellen.

Die Aufgabe wird erfindungsgemäß dadurch gelöst, daß Kokereiteere, insbesondere aus mit vorerhitzter Kohle betriebenen Verkokungsofenbatterien, mit Feststoffgehalten von ca. 10 bis 30 Gew-% in Kerzenfiltern unter Zugabe geringer Mengen oder ohne Filterhilfsmittel und/oder Verdünnungsmittel auf ein zur Weiterverarbeitung geeignetes Maß gefiltert werden.

Aus den beiden deutschen Patentanmeldungen DE-A-28 28 976 und DE-A-32 12 316 ist darüber hinaus ein Spaltfilterbestehendes Kerzenfilter zur Filtrierung hochviskoser Flüssigkeiten bekannt. Dabei erfolgt die Feststoffabtrennung über ein speziell ausgebildetes Bündel von Filterkerzen, wobei die Feststoffe auf der Kerzenoberfläche abgeschieden und Filtrat in das Kerzeninnere gelangt und über entsprechende Austragsvorrichtungen aus dem Filter ausgetragen werden. Aus diesen beiden Schriften und auch aus der DE-A-27 06 938 sind lediglich Verfahren und Vorrichtung zum Filtrieren von Teeren, Pechen und anderen Bestandteilen aus Kohle bekannt, die bei der Kohlehydrierung anfallen. Derartige Teere unterscheiden sich in ihrer Konsistenz und Filtrierbarkeit wesentlich von den Kokereiteeren.

Aufgrund der Erfahrungen mit den bekannten Kerzenfiltern, die in der Regel aus keramischen Materialien bestanden, hielt man es bisher in der Fachwelt für ausgeschlossen, daß die hochfeststoffhaltigen Kokereiteere überhaupt mit Kerzenfiltern gereinigt werden könnten. Bei diesen Filtern aus keramischen Materialien lag das Problem darin, daß die Poren des Filters sich immer wieder zusetzten und nur mühsam mit sehr viel Lösungsmittel wieder freigemacht werden konnten. Überraschenderweise ist es nun mit den neuen Kerzenfiltern gemäß P 32 12 316 gelungen Kokereiteere, insbesondere aus mit vorerhitzter Kohle betriebenen Verkokungsofenbatterien, mit Feststoffgehalten von ca. 10 bis 30 Gew-%, ggf. unter Zugabe nur geringer Mengen Filterhilfsmittel und/oder Verdünnungsmittel, auch einen hochfeststoffhaltigen Kokereiteer zu

filtern.

Diese Teere mit Feinstfeststoffen, die bisher nur schwer oder gar nicht zu verarbeiten waren, lassen sich erfindungsgemäß in den Kerzenfiltern hinreichend filtern, sogar auf QI-Gehalte im Filtrat von ca. 0,1 Gew-%.

Man kann auch zweckmäßigerweise vorsehen, daß die Kokereiteere mit einem Feststoffgehalt von größer 30 Gew-% in den Kerzenfiltern gefiltert werden. Auch eine Aufarbeitung derartiger Kokereiteere ist überraschenderweise mit Hilfe dieser Kerzenfilter möglich geworden. Bei der Filtration nach diesem neuen Verfahren fällt nicht nur ein wertvoller, fast vollständig feststofffreier Teer an, sondern darüber hinaus auch ein Filterkuchen in gut handhabbarer Form, was von besonderem Vorteil ist. Erfindungsgemäß ist man nun in der Lage, den in den Verkokungsöfen anfallenden Teer in den Kerzenfiltern zu filtern. Auf diese Weise erhält man einerseits ein Filtrat, das in den üblichen Teerdestillationen verarbeitet werden kann und andererseits einen vernünftig handhabbaren Filterkuchen.

Insbesondere für den großtechnischen Einsatz hat es sich als zweckmäßig erwiesen, daß der Teer zentrifugiert wird und der Zentrifugenrestschlamm gefiltert wird. Gerade diese Kombination von Zentrifugierung und anschließender Kerzenfilterung ermöglicht es, beide Anlagen sinnvoll zu dimensionieren. Dabei wird berücksichtigt, daß die Zentrifuge für sehr große Mengen ausgelegt ist aber nur bis zu einem bestimmten Maß den Feststoff aus dem Teer entfernen kann. Das für einen sehr hohen Reinheitsgehalt ausgelegte Kerzenfilter kann dann für einen sehr viel geringeren Durchsatz ausgelegt werden.

In Hinblick auf eine gute Auslegung der Anlagen hat sich als günstig erwiesen, daß nur der Zentrifugenrestschlamm mit einem Feststoffgehalt von mindestens 30 Gew-% in Kerzenfiltern gefiltert wird.

Es hat sich ebenfalls gezeigt, daß man die Filterung auch ohne jegliches Filterhilfsmittel durchführen kann, so daß das Filtern ohne weitere Zusatzstoffe betrieben werden kann.

Abhängig von der jeweiligen genauen Zusammensetzung der aufzuarbeitenden Kokereiteere kann es naturgemäß sinnvoll sein, spezielle Filterhilfsmittel mit einzusetzen. Dazu schlägt die Erfindung vor, bis zu 5 Gew-%, vorzugsweise 1 bis 3 Gew-%, Filterhilfsmittel zuzumischen. Die Herstellung des Filterhilfsmittels ist aus der DE-A-30 05 246 in der Weise bekannt, daß ein bei der Filtration von Teeren, Pechen, Kohleextrakten und Kohleölen anfallender Filterrückstand mit Heißdampf trockengeblasen, der Filterkuchen daraufhin auf eine Körnung von etwa 0,5 mm aufgearbeitet und nach Zumischen von 20 bis 45 Gew.-% (bezogen auf den Filterkuchen) einer Steinkohle mit einem Gehalt an Flüchtigen Bestandteilen größer als 25 % in einer Körnung von etwa 0,5 mm einer thermischen Behandlung mit einer Erhitzungsgeschwindigkeit von größer als 1 000° C/min bis auf eine Temperatur von 500 bis 1 200° C in einer Wirbelschicht unterworfen wird. Man kann auch die Kokereiteere gemeinsam mit Dickteer und/oder Zentrifugenrestschlamm mischen und/oder die Feststoffe des Zentrifugenrestschlammes als Filterhilfsmittel einsetzen und ggf. unter Zugabe zusätzlicher Filterhilfsmittel filtern.

Es wurde überraschenderweise gefunden, daß selbst Teerschlamme mit einem Chinolinunlöslichengehalt (sog. QI-Wert) von ca. 40 Gew-%, wie die erwähnten Dickteere oder Restschlamme aus der Zentrifuge, sich mit diesem Verfahren filtrieren lassen.

Erfindungsgemäß wird weiterhin vorgeschlagen, als Verdünnungsmittel auf der Kokerei anfallende Produkte zu verwenden. Dabei hat es sich insbesondere als günstig erwiesen, als Verdünnungsmittel weniger als 25 Gew-%, vorzugsweise 15 bis 20 Gew-%, eines Teeröles, z. B. Kreosote, zu verwenden. Dieser Zusatz eines Verdünnungsmittels bewirkt, daß sich der absolute Durchsatz an Filtrat nahezu verdoppeln läßt. In Hinblick auf eine Anwendung eines möglichst auf der Kokerei anfallenden Produktes wird vorgeschlagen, als Verdünnungsmittel bei der Vorkühlung anfallenden Teer zu verwenden. Dieser Teer kann ohne größere Aufheizung direkt dem Mischer zugeführt werden. Unter bestimmten Voraussetzungen ist es auch sinnvoll, als Verdünnungsmittel einen Teil des Filtrates zu verwenden, das dann praktisch im Kreislauf geführt wird.

In Hinblick auf eine sinnvolle und wirtschaftliche Verwendung des im Kerzenfilter anfallenden Filterkuchens sieht die Erfindung vor, daß der vollständig trockene Filterkuchen aufgemahlen und der feuchten oder vorerhitzten Einsatzkohle für den Koksofen beigegeben wird. Der Filterkuchen kann, insbesondere nach der Aufmahlung, in gut dosierbarer Form der Kohle beigemischt werden, so daß auf jeden Fall eine eventuelle Nesterbildung innerhalb der Verkokungskammer vermieden werden kann. Man kann auch den getrockneten Filterkuchen einfach verbrennen und auf diese Weise die Energie sinnvoll nutzen. Eine weitere Möglichkeit der Entsorgung wäre die Zugabe des trockenen Filtergutes zur Beschickung des Hochofens. Schließlich kann man auch den Filterkuchen entsprechend aufarbeiten und als Bindemittel für Briketts verwenden.

Vor allem in der Kombination Zentrifuge-Filter kann eine Konditionierung des Restschlammes zu einer brauchbaren Konsistenz von besonderem Vorteil sein.

Die Erfindung sieht auch vor, das anfallende Filtrat zur Erzeugung von Spezialkoksen, z. B. Nadelkoks, zu verwenden oder mit bestimmten Anteilen eines noch nicht gefilterten bzw. noch nicht so weit aufgearbeiteten feststoffreicheren Teers zu vermischen, wobei ein Produkt mit definiertem Feststoffgehalt erhalten wird. Die Teerverarbeiter können auf diese Weise sich flexibel der jeweiligen Marktsituation anpassen.

Die Erfindung wird anhand der beigefügten Schemaskizze und der Beispiele näher erläutert.

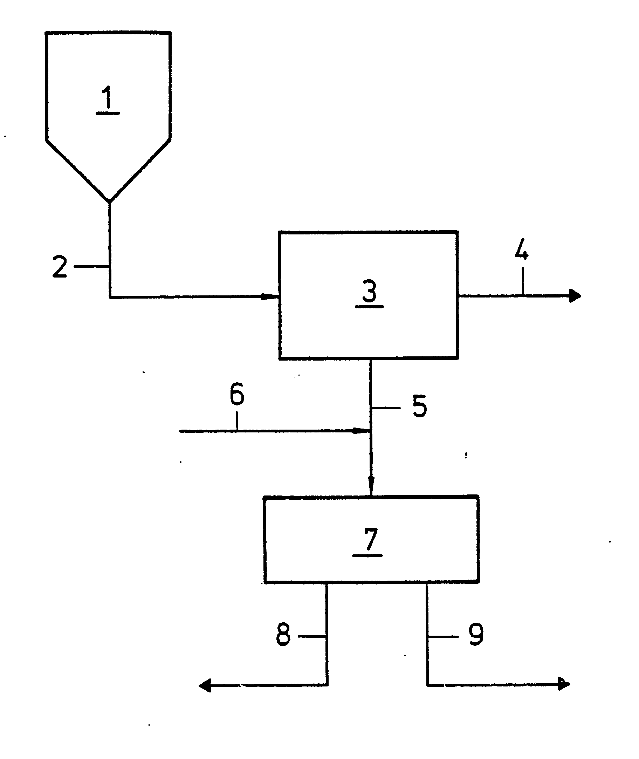

In der Figur ist die Kombination der Zentrifuge mit dem Kerzenfilter als bevorzugtes Ausführungsbeispiel schematisch dargestellt. Mit (1) ist der Teervorratsbehälter bezeichnet, aus dem der anfallende Kokereiteer oder auch nur der Dickteer über die Leitung (2) auf die Zentrifuge (3) gegeben wird. Bei (4) wird der weitgehend feststofffreie Teerstrom abgezogen, während über (5) der Zentrifugenrestschlamm nach eventueller Mischung mit einem Verdünnungsmittel und einem Filterhilfsmittel, das über Leitung (6) zugeführt wird, in das Kerzenfilter gegeben wird. Aus dem Kerzenfilter werden der Filterkuchen (8) und das Filtrat (9) jeweils getrennt abgezogen.

Die Erfindung wird im folgenden durch Anwendungsbeispiele näher erläutert.

**Beispiel 1**

Koksofenteer aus einer mit vorerhitzter Kohle beschickten Koksofenbatterie mit einem Wassergehalt von 10,1 und QI-Wert von 15,2 Gew-% wird bei einer Temperatur von ca. 50°C im Druckbehälter mit 5 Gew-% Filterhilfsmittel und ohne Verdünnung vermischt und unter Rühren auf die erforderliche Filtrationstemperatur augeheizt. Der dabei entstehende Wasserdampf wird über Entlüfter des Vorratsbehälters abgetrieben. Anschließend wird der entwässerte Teer bei ca. 160 bis 170°C im Kerzenfilter gereinigt. Die Filtrationsrate, die sich jeweils auf den gesamten Filterzyklus, einschließlich Trockenvorgang für den Filterkuchen und Entfernung des Filterkuchens, bezieht, betrug bei Versuchen ohne Verdünnung 41 kg/m²h. Das anfallende Filtrat hatte noch einen QI-Gehalt von 0,03 Gew-% und 0,02 Gew-% Asche.

**Beispiel 2**

Hierbei enthielt der Teer 17 Gew-% Wasser und einen QI-Gehalt von 17,6 Gew-%. Unter Zugabe von 5 Gew-% Filterhilfsmittel und 25 Gew-% Kreosote als Verdünnung betrug die Filtrationsrate 50 kg/m²h, wobei das erhaltene Filtrat einen QI-Gehalt von 0,2 und der Filterkuchen einen QI-Gehalt von 53 Gew-% enthielt.

**Beispiel 3**

In diesem Fall betrug der Wassergehalt des Teeres 20 Gew-% und der QI-Gehalt 19,9 Gew-%.

Unter Zumischung von 5,3 Gew-% Filterhilfsmittel und 30 Gew-% (bezogen auf wasserfreien Teer) Primary Cooler Tar betrug die Filtrationsrate 63 kg/m²h. Das Filtrat enthielt hierbei auch nur einen QI-Gehalt von 0,2 Gew-% bei 0,02 Gew-% Asche.

**Beispiel 4**

Der aus der mit vorerhitzter Kohle beschickten Verkokungsofenbatterie ankommende Teer wurde zunächst zentrifugiert, wobei der anfallende Zentrifugenrestschlamm einen QI-Gehalt von ca. 40 Gew-% hatte. Er wurde mit 20 Gew-% Verdünnung vermischt und erhielt nach der Filtrierung bei einer Filtrierrate von 29 kg/m²h einen QI-Gehalt von 1,2 Gew-%.

**Beispiel 5**

Ein bei den Vorkühlern anfallender Teer wurde mit einem QI-Gehalt von 5,8 Gew-% und einem Wassergehalt von 3,5 Gew-% mit 3 Gew-% Filterhilfsmittel in den Kerzenfiltern eingesetzt. Die Filtrationsrate betrug 116 kg/m²h, wobei ebenfalls ohne Verdünnung gearbeitet wurde. Das anfallende Filtrat hatte noch einen QI-Gehalt von 0,2 Gew-%.

**Beispiel 6**

Ein bei mit Feuchtkohle betriebenen Verkokungsofenbatterien anfallender Teer mit einem Wassergehalt von 8 Gew-%, QI-Gehalt von 11,6 Gew-% wurde ohne Verdünnung gefiltert, wobei eine Filtrationsrate von 37 kg/m²h erreicht wurde. Das Filtrat konnte bis auf einen QI-Gehalt von 0,5 Gew-% und einen Aschegehalt von 0,03 Gew-% reduziert werden.

**Patentansprüche**

1. Verfahren zur Reinigung von hochfeststoffhaltigen Kokereiteeren, die nach verschiedenen Trennverfahren vom Rohgas anfallen, dadurch gekennzeichnet, daß Kokereiteere, insbesondere aus mit vorerhitzter Kohle betriebenen Verkokungsofenbatterien, mit Feststoffgehalten von ca. 10 bis 30 Gew-% in Kerzenfiltern unter Zugabe geringer Mengen oder ohne Filterhilfsmittel und/oder Verdünnungsmittel auf ein zur Weiterverarbeitung geeignetes Maß gefiltert werden.

2. Verfahren zur Reinigung von hochfeststoffhaltigen Kokereiteeren, die nach verschiedenen Trennverfahren vom Rohgas anfallen, nach Anspruch 1, <u>dadurch gekennzeichnet,</u> daß Kokereiteere mit einem Feststoffgehalt von größer 30 Gew-% in den Kerzenfiltern gefiltert werden.

3. Verfahren zur Reinigung von hochfeststoffhaltigen Kokereiteeren, <u>dadurch gekennzeichnet,</u> daß der in den Verkokungsöfen anfallende Dickteer in den Kerzenfiltern gefiltert wird.

4. Verfahren zur Reinigung von hochfeststoffhaltigen Kokereiteeren nach Anspruch 1, <u>dadurch gekennzeichnet,</u> daß der Kokereiteer zentrifugiert und der Zentrifugenschlamm in Kerzenfiltern gefiltert wird.

5. Verfahren zur Reinigung von hochfeststoffhaltigen Kokereiteeren nach Anspruch 4, <u>dadurch gekennzeichnet,</u> daß nur der Zentrifugenrestschlamm mit einem Feststoffgehalt von mindestens 30 Gew-% in Kerzenfiltern gefiltert wird.

6. Verfahren zur Reinigung von hochfeststoffhaltigen Kokereiteeren nach einem der vorhergehenden Ansprüche, <u>dadurch gekennzeichnet,</u> daß ohne Filterhilfsmittel gefiltert wird.

7. Verfahren zur Reinigung von hochfeststoffhaltigen Kokereiteeren nach einem der Ansprüche 1 bis 5, <u>dadurch gekennzeichnet,</u> daß bis zu 5 Gew-%, vorzugsweise 1 bis 3 Gew-%, Filterhilfsmittel zugemischt werden.

8. Verfahren zur Reinigung von hochfeststoffhaltigen Kokereiteeren nach einem der vorhergehenden Ansprüche, <u>dadurch gekennzeichnet,</u> daß die Kokereiteere gemeinsam mit Dickteer und/oder mit Zentrifugenrestschlamm gemischt werden und/oder die Feststoffe des Zentrifugenrestschlammes als Filterhilfsmittel dienen und ggf. unter Zugabe zusätzlicher Filterhilfsmittel gefiltert werden.

9. Verfahren zur Reinigung von hochfeststoffhaltigen Kokereiteeren nach einem der vorhergehenden Ansprüche, <u>dadurch gekennzeichnet,</u> daß als Verdünnungsmittel auf der Kokerei anfallende Produkte verwendet werden.

10. Verfahren nach Anspruch 9, <u>dadurch gekennzeichnet,</u> daß als Verdünnungsmittel weniger als 50 Gew-%, vorzugsweise 15 bis 25 Gew-%, Teeröle, z. B. Kreosotöl oder ein im Siedebereich entsprechendes aromathaltiges, erdölstämmiges Destillat, verwendet werden.

11. Verfahren zur Reinigung von hochfeststoffhaltigen Kokereiteeren nach den Ansprüchen 9 und 10, <u>dadurch gekennzeichnet,</u> daß als Verdünnungsmittel bei der Vorkühlung anfallender Teer verwendet wird.

12. Verfahren zur Reinigung von hochfeststoffhaltigen Kokereiteeren nach einem der vorhergehenden Ansprüche, <u>dadurch gekennzeichnet,</u> daß als Verdünnungsmittel ein Teil des Filtrats dient.

13. Verfahren zur Reinigung von hochfeststoffhaltigen Kokereiteeren nach einem der vorhergehenden Ansprüche, <u>dadurch gekennzeichnet,</u> daß der vollständig trockene Filterkuchen aufgemahlen und der feuchten oder vorerhitzten Einsatzkohle für den Koksofen beigegeben wird.

14. Verfahren zur Reinigung von hochfeststoffhaltigen Kokereiteeren nach einem der vorhergehenden Ansprüche, <u>dadurch gekennzeichnet,</u> daß der vollständig trockene Filterkuchen verbrannt wird.

15. Verfahren zur Reinigung von hochfeststoffhaltigen Kokereiteeren nach einem der vorhergehenden Ansprüche, <u>dadurch gekennzeichnet,</u> daß der trockene Filterkuchen der Beschickung des Hochofens zugegeben wird.

16. Verfahren zur Reinigung von hochfeststoffhaltigen Kokereiteeren nach einem der vorhergehenden Ansprüche, <u>dadurch gekennzeichnet,</u> daß der Filterkuchen aufgearbeitet und als Bindemittel für Briketts verwendet wird.

17. Verfahren zur Reinigung von hochfeststoffhaltigen Kokereiteeren nach einem der vorhergehenden Ansprüche, <u>dadurch gekennzeichnet,</u> daß das anfallende Filtrat zur Erzeugung von Spezialkoksen, z. B. Nadelkoks, dient.

18. Verfahren zur Reinigung von hochfeststoffhaltigen Kokereiteeren nach einem der vorhergehenden Ansprüche, <u>dadurch gekennzeichnet,</u> daß das anfallende Filtrat mit bestimmten Anteilen eines noch nicht gefilterten bzw. noch nicht so weit aufgearbeiteten feststofffreien Teeres vermischt wird, wobei ein Produkt mit definiertem Feststoffgehalt erhalten wird.

## Claims

1. Process to purify coke oven plant tars (coke tars) containing highly concentrated solids obtained after various separation processes from crude gas, <u>characterized in that</u> coke tars, particularly those obtained from coke oven batteries charged with preheated coal, are filtered with solid contents of approx. 10 to 30 % by wt. in cartridge filters by way of adding little amounts of filtering aids and/or diluents or without them to obtain a quality suitable for further processing.

2. Process to purify coke tars containing highly concentrated solids obtained after various separation processes from crude gas, in accordance with Claim 1, <u>characterized in that</u> coke tars containing more than 30 % by wt. of solids are filtered in cartridge filters.

3. Process to purify coke tars containing highly concentrated solids, <u>characterized in that</u> the heavy tar obtained from coke ovens is filtered in cartridge filters.

4. Process to purify coke tars containing highly concentrated solids in accordance with Claim 1, <u>characterized in that</u> coke tar is centrifuged and that the centrifugal sludge is filtered in cartridge filters.

5. Process to purify coke tars containing highly concentrated solids in accordance with Claim 4, characterized in that only the residual centrifugal sludge with at least 30 % by wt. solid contents is filtered in the cartridge filters.

6. Process to purify coke tars containing highly concentrated solids in accordance with anyone claim of the preceding ones, characterized in that filtration is accomplished without any filtering aid.

7. Process to purify coke tars containing highly concentrated solids in accordance with anyone claim of Claims 1 to 5, characterized in that as much as 5 % by wt., preferrably 1 to 3 % by wt., of filtering aid are added to the blend.

8. Process to purify coke tars containing highly concentrated solids in accordance with anyone claim of the preceding ones, characterized in that coke tars together with heavy tar and/or centrifugal sludge are mixed and/or in that solids of residual centrifugal sludge serve as filtering aids and are filtered, if required, by way of adding additional filtering aids.

9. Process to purify coke tars containing highly concentrated solids in accordance with anyone claim of the preceding ones, characterized in that products obtained on the coke oven plant are utilized to serve as diluents.

10. Process in accordance with Claim 9, characterized in that less than 50 % by wt., preferrably 15 to 25 % by wt., of tarry oils such as for example creosote oil or an appropriate aromatic substance containing oil-based distillate being in boiling range are applied.

11. Process to purify coke tars containing highly concentrated solids in accordance with Claims 9 and 10, characterized in that tar obtained on primary cooling is applied to serve as diluent.

12. Process to purify coke tars containing highly concentrated solids in accordance with anyone claim of the preceding ones, characterized in that some part of the filtrate serves as diluent.

13. Process to purify coke tars containing highly concentrated solids in accordance with anyone claim of the preceding ones, characterized in that the completely dry filter cake is pulverized and added to wet or preheated charge coal for coke oven.

14. Process to purify coke tars containing highly concentrated solids in accordance with anyone claim of the preceding ones, characterized in that the completely dry filter cake is burnt.

15. Process to purify coke tars containing highly concentrated solids in accordance with anyone claim of the preceding ones, characterized in that the completely dry filter cake is added to blast furnace burden.

16. Process to purify coke tars containing highly concentrated solids in accordance with anyone claim of the preceding ones, characterized in that the filter cake is further processed and utilized to serve as binding agent for briquettes.

17. Process to purify coke tars containing highly concentrated solids in accordance with anyone claim of the preceding ones, characterized in that the filtrate obtained is utilized for production of speciality cokes such as needle coke.

18. Process to purify coke tars containing highly concentrated solids in accordance with anyone claim of the preceding ones, characterized in that the filtrate obtained is blended in specific portions of a not yet filtered and/or not yet sufficiently processed, solid-free tar, thereby obtaining a product with a defined solid content.

**Revendications**

1. Procédé pour l'épuration des goudrons de cokerie à haute teneur en matières solides qui sont dégagés des gaz bruts à la suite de divers procédés de séparation, caracterisé en ce que les goudrons de cokerie, notamment ceux qui proviennent des batteries de fours à coke alimentées en charbon préchauffé et qui ont des teneurs en matières solides d'environ 10 à 30 % en poids, sont soumis à un filtrage dans des filtres-bougies avec ou sans adjuvants de filtrage et/ou agents de dilution pour les rendre convenables au traitement ultérieur.

2. Procédé pour l'épuration des goudrons de cokerie à haute teneur en matières solides qui sont dégagés des gaz bruts à la suite de divers procédés de séparation selon revendication 1, caractérisé en ce que les groudrons de cokerie à une teneur en matières solides supérieure à 30 % en poids sont filtrés dans les filtres-bougies.

3. Procédé pour l'épuration des goudrons de cokerie à haute teneur en matières solides caractérisé en ce que les goudrons épais produits dans les fours à coke sont filtrés dans les filtres-bougies.

4. Procédé pour l'épuration des goudrons de cokerie à haute teneur en matières solides selon revendication 1, caractérisé en ce que les goudrons de cokerie sont centrifugés et que les boues de centrifugation sont filtrées dans les filtres-bougies.

5. Procédé pour l'épuration des goudrons de cokerie à haute teneur en matières solides selon revendication 4, caractérisé en ce que seulement les boues de centrifugation avec une teneur en matières solides d'au moins 30 % en poids sont filtrées dans les filtres-bougies.

6. Procédé pour l'épuration des goudrons de cokerie à haute teneur en matières solides selon une des revendications précédentes, caractérisé en ce que le filtrage se fait sans adjuvant de filtrage.

7. Procédé pour l'épuration des goudrons de cokerie à haute teneur en matières solides selon les revendications 1 - 5, caractérisé en ce qu'un adjuvant de filtrage est ajouté à raison de 5 % en poids au maximum, de préférence 1 - 3 % en poids.

8. Procédé pour l'épuration des goudrons de cokerie à haute teneur en matières solides selon une des revendications précédentes caractérisé en ce que les goudrons de cokerie sont mélangés aux goudrons épais et/ou aux boues de centrifugation et/ou les matières solides des boues de centrifugation servent d'adjuvant de filtrage et que, le cas échéant, les mélanges résultants sont filtrés avec un adjuvant de filtrage supplémentaire.

9. Procédé pour l'épuration des goudrons de cokerie à haute teneur en matières solides selon une des revendications précédentes, caractérisé en ce que des produits obtenus dans la cokerie servent d'agent de dilution.

10. Procédé selon revendication 9, caractérisé en ce que le créosote ou un autre destillat aromatique à base de pétrole ayant le même domaine d'ébullition est utilisé comme agent de dilution à raison de moins de 50 % en poids, de préférence de 15 - 25 % en poids.

11. Procédé pour l'épuration des goudrons de cokerie à haute teneur en matières solides selon les revendications 9 et 10, caractérisé en ce que des goudrons obtenus dans la condensation primaire du gaz sont utilisés comme agent de dilution.

12. Procédé pour l'épuration des goudrons de cokerie à haute teneur en matières solides selon une des revendications précédentes, caractérisé en ce qu'une partie du filtrat est utilisée comme agent de dilution.

13. Procédé pour l'épuration des goudrons de cokerie à haute teneur en matières solides selon une des revendications precedentes, caractérisé en ce que le gâteau de filtre complètement séché est broyé et mélangé au charbon d'enfournement préchauffé pour fours à coke.

14. Procédé pour l'épuration des goudrons de cokerie à haute teneur en matières solides selon une des revendications précédentes, caractérisé en ce que le gâteau de filtre complètement séché est incinéré.

15. Procédé pour l'épuration des goudrons de cokerie à haute teneur en matières solides selon une des revendications précédentes, caractérisé en ce que le gâteau de filtre est mélangé au lit de fusion du haut fourneau.

16. Procédé pour l'épuration des goudrons de cokerie à haute teneur en matières solides selon une des revendications précédentes, caractérisé en ce que le gâteau de filtre est traité pour servir de liant dans la fabrication de briquettes.

17. Procédé pour l'épuration des goudrons de cokerie à haute teneur en matières solides selon une des revendications précédentes, caractérisé en ce que le filtrat obtenu est employé dans la production de cokes spéciaux, par exemple coke aciculaire.

18. Procédé pour l'épuration des goudrons de cokerie à haute teneur en matières solides selon une des revendications précédentes, caractérisé en ce que l'on mélange au filtrat produit un certain pourcentage de goudrons non filtrés ou non traités exempts de matières solides pour obtenir un produit avec une teneur définie en matières solides.

0 116 956